# EUROPÄISCHE PATENTSCHRIFT

(11) **EP 2 301 506 B1**
(45) Veröffentlichungstag und Bekanntmachung des Hinweises auf die Patenterteilung: **15.02.2017**
(21) Anmeldenummer: 10194524.4
(22) Anmeldetag: 08.02.2007
(51) Int. Cl.: A61G 7/08, A61G 5/04, B62B 5/00

(54) **In einem starren Rahmen gelagerte Zusatzrolle**
Additional roller in a fixed frame
Rouleau supplémentaire installé dans un cadre rigide

(30) Priorität: 17.02.2006 DE 102006007377
(43) Veröffentlichungstag der Anmeldung: 30.03.2011
(62) Teilanmeldung aus: 07704448.5
(73) Patentinhaber: Tente GmbH & Co. KG, 42929 Wermelskirchen (DE)
(72) Erfinder: Block, Wolfgang, 42929, Wermelskirchen (DE); Hofrichter, Günther, 42553 Velbert (DE)
(74) Vertreter: Müller, Enno

(56) Entgegenhaltungen:
- DE-C1- 10 120 316
- US-A- 5 222 567

## Beschreibung

Die Erfindung betrifft eine in einem starren Rahmen gelagerte Zusatzrolle, wobei die Zusatzrolle zusammen mit dem Rahmen relativ zu einem Chassis, an dem sie anzubringen ist, durch Verschwenken anhebbar oder absenkbar ist, wobei weiter ein an dem Rahmen befestigter Antriebsmotor für die Zusatzrolle vorgesehen ist und ein gesonderter Schwenkantrieb zu Anheben und Absenken der Zusatzrolle vorgesehen ist.

Aus der CA 2457182 A1 ist ein Krankenhausbett mit einer Zusatzrolle bekannt. Die Zusatzrolle ist in einem Gehäuse aufgenommen, welches Gehäuse schwenkbeweglich mit dem Chassis verbunden ist. Am freien Ende des Gehäuses greift ein gesonderter Verschwenkantrieb an, welcher schwenkbeweglich mit dem Chassis verbunden ist.

Weiter ist auch aus der US 6772850 B1 ein Krankenhausbett mit einer Zusatzrolle bekannt. Die Zusatzrolle und der Antriebsmotor sind von einem Gehäuse aufgenommen, welches an einem Ende einer Blattfeder montiert ist. Das anderer Ende der Blattfeder ist mit dem Chassis verbunden. Die Blattfeder beaufschlagt die Zusatzrolle in Richtung des Fußbodens. Um die Zusatzrolle von dem Fußboden zu beabstanden, ist ein Mechanismus vorgesehen, der an einem dem Gehäuse überstehenden Ende der Blattfeder angreift und diese spannt. Der Mechanismus ist fest mit dem Chassis verbunden. Gibt der Mechanismus die Blattfeder frei, so verlagert sich die Zusatzrolle in Richtung des Fußbodens.

Darüber hinaus ist auch zum Stand der Technik auf die CA 2010543 A, DE 10120316 C1, FR 2735019 A1, US 5083625 A, US 6725956 B1, US 6752224 B2 und WO01/19313 A1 zu verweisen. Aus der US 5135063 A ist eine motorisch antreibbare Zusatzrolle für einen Rollstuhl bekannt.

Der Erfindung liegt die Aufgabe zugrunde, eine in einem starren Rahmen gelagerte Zusatzrolle vorteilhaft auszugestalten.

Diese Aufgabe ist beim Gegenstand nach den Merkmalen des Anspruches 1 gelöst, wobei darauf abgestellt ist, dass der gesonderte Verschwenkantrieb insgesamt an dem Rahmen befestigt ist und mit diesem verschwenkt, wobei die kompakte Bauweise der Einheit aus Rahmen, Antriebsmotor und Zusatzrolle vorteilhaft ist im Hinblick auf eine Ertüchtigung vorhandener Krankenhausbetten oder unabhängig hiervon.

Zufolge einer derartigen Ausgestaltung bilden der Verschwenkantrieb, die Zusatzrolle und der Antriebsmotor zusammen mit dem Rahmen eine Einheit. Der Rahmen nimmt dadurch auch vollständig das Gewicht des Verschwenkantriebes auf. Grundsätzlich ist nur noch ein Verschwenkgelenk, bezüglich des Rahmens, relativ zu dem Chassis, erforderlich. Die Einheit kann als Ganzes an einem Chassis eines Krankenhausbettes in einfachster Weise montiert werden. Dies ermöglicht es, im Rahmen einer werkstattmäßigen Vormontage, bereits die Ausrichtung des Schwenkantriebes, speziell eines Exzenters, wie nachstehend noch im Einzelnen beschrieben, im Hinblick auf die Zusatzrolle vorzunehmen. Gewichtsmäßig ist eine Konzentration geschaffen ist.

Diese Aufgabe ist beim Gegenstand des Anspruches 1 gelöst, wobei darauf abgestellt ist, dass die kompakte Einheit aus Rahmen, Antriebsmotor und Zusatzrolle, die vorteilhaft im Hinblick auf eine Ertüchtigung vorhandener Krankenhausbetten mit einer solchen Zusatzrolle oder unabhängig hiervon ist, mit einem gesonderten Verschwenkantrieb gebildet ist, der insgesamt an dem Rahmen befestigt ist und mit diesem verschwenkt.

Im Weiteren ist bevorzugt auch eine Montageplatte vorgesehen, mit welcher der Rahmen schwenkbeweglich verbunden ist. Bevorzugt ist auch ein Stützarm Teil der Montageplatte. Die Anlenkung (Schwenklager) bzw. Abstützung des Exzenters, gegebenenfalls auch vermittels der beschriebenen Druckfeder, findet somit nur relativ zu einem Teil statt, das ohne Weiteres in die Baugruppe des Rahmens mit Zusatzrolle und Verschwenkantrieb einbezogen sein kann. Die Montageplatte allein ist fest an dem Chassis zu montieren. Der Rahmen ist - nur - schwenkbeweglich mit der Montageplatte verbunden.

Entsprechend wird die Aufrüstung eines Krankenhausbettes mit der Zusatzrolle durch die Montageplatte nochmals entscheidend vereinfacht. Es müssen an dem Chassis des Krankenhausbettes beispielsweise nur die Bohrungen zur Befestigung der Montageplatte hergestellt werden.

Es erweist sich als vorteilhaft, dass der Verschwenkantrieb mittels eines Exzenters den Rahmen relativ zu dem Chassis oder der Montageplatte, an dem der Exzenter abgestützt ist, bewegt. Es ist nur eine berührende Zusammenwirkung insoweit mit der Montageplatte erforderlich, aber beispielsweise keine gelenkartige Verbindung. Diese kann, wie noch erläutert, vielmehr unabhängig hiervon realisiert sein. Zudem sind vorteilhaft die beweglichen Teile reduziert. Der Exzenter kann durch eine auf die Welle fest aufgebrachte Exzenterscheibe gebildet sein. Die Drehbewegung für den Exzenter wird von dem Verschwenkantrieb erzeugt. Wenn die Anordnung so vorgesehen ist, dass die Achsen des Verschwenkantriebes und des Exzenters sich kreuzen, ist ein Getriebe erforderlich um die Antriebskraft von dem Verschwenkantrieb auf den Exzenter zu übertragen. Bevorzugt ist jedoch, dass die Achsen bzw. Wellen insoweit parallel sind oder fluchten. Eine Antriebswelle

des Verschwenkantriebs kann hierzu vorteilhafterweise unmittelbar die bereits angesprochene Exzenterscheibe tragen.

Soweit bzw. solange der Exzenter sich an der Montageplatte abstützt, ist auch ein Anschlag (ständig) gegeben in Bezug auf eine Bodenkontaktstellung der Zusatzrolle. Insoweit ist eine vergleichbar starre (in Druckrichtung der Zusatzrolle) Zusammenwirkung zwischen der Zusatzrolle und der Montageplatte gegeben wie es bezüglich der herkömmlichen Rollen bei einem solchen Krankenhausbett ohnehin der Fall ist. Andererseits kann die - ledigliche - Exzenterabstützung der Zusatzrolle an der Montageplatte auch dahingehend genutzt sein, dass der Exzenter in der Bodenkontaktstellung nicht unmittelbar an der Montageplatte anliegt, sondern unter Vermittlung eines Ausgleichsteiles. Ein solches Ausgleichsteil kann weiter bevorzugt ein Federteil sein, das sich entsprechend einerseits an der Montageplatte und andererseits an der Zusatzrolle bzw. speziell dem Exzenter abstützt. Geeignet ist insofern eine den Rahmen (insgesamt) in die abgesenkte Stellung vorspannende Druckfeder. Diese Druckfeder wirkt dann bei abgesenkter, in Bodenkontakt befindlicher Zusatzrolle wie ein Stoßdämpfer. Der Kontakt der Zusatzrolle mit dem Fußboden ist auch bei schneller Fahrt und Unebenheiten gesichert.

Zugleich werden entsprechende Unebenheiten im Fußboden durch die Feder ausgeglichen, ohne dass es etwa einer Verstellung des Exzenters oder eines Ausgleichs durch ein Getriebe bedarf.

Weiter bevorzugt ist vorgesehen, dass die genannte Druckfeder vermittels eines an einer montageplattefesten Achse angelegten Druckhebels auf den Exzenter einwirkt. Der Druckhebel kann um dieselbe Achse wie auch die Zusatzrolle verschwenken. Dies ist in der Regel auch dieselbe Achse, welche den Rahmen an der Montageplatte verschwenkbar haltert.

Mittels des Druckhebels kann die unmittelbare Zusammenwirkung mit dem Exzenter realisiert sein. Es ist nicht erforderlich, dass die Feder unmittelbar an dem Exzenter anliegt. Um im Weiteren die Beanspruchungen hinsichtlich der erforderlichen Relativbewegungen zwischen dem Druckhebel und dem Exzenter günstig zu gestalten, kann eine Rolle, beispielsweise nach Art eines Kugellagerrings, an dem Druckhebel oder gegebenenfalls auch an dem Exzenter vorgesehen sein. Es ergibt sich so bei Bewegung eine günstige Rollenübertragung.

Der Exzenter wirkt aber nicht nur über die Feder mit der Montageplatte zusammen. Denn allein hierdurch wäre der Rahmen ständig in der abgesenkten Stellung. Zur Anhebung und Absenkung ist vielmehr zusätzlich, zumindest bezüglich eines gewissen Teilbereichs des Absenk- oder Anhebehubes, eine starre Abstützung des Exzenters relativ zu der Montageplatte erforderlich. Hierzu ist ein Stützarm vorgesehen, mit welchem - umfangsmäßig in Bezug auf den Exzenter versetzt zu der Zusammenwirkung zwischen dem beschriebenen Druckhebel und dem Exzenter (wenn der Druckhebel vorgesehen ist) - der Exzenter ebenfalls zusammenwirkt. Auch hinsichtlich dieses Stützarms empfiehlt sich die Realisierung einer Rollbewegung, durch die bereits im Zusammenhang mit dem Druckhebel beschriebene kugellagerartige Ausbildung.

Der Stützarm bildet den bereits angesprochenen Anschlag für den Exzenter aus.

Hinsichtlich des Rahmens selbst ist bevorzugt vorgesehen, dass er aus zwei gegenüberliegenden Rahmenwänden besteht, in deren Längserstreckung hintereinander die Wellen der Zusatzrolle und des Exzenters gelagert sind. Weiter kann vorgesehen sein, dass die Rahmenwände, zusätzlich zu der Verbindung durch die genannten Wellen, noch mittels einer nur der Versteifung dienenden Querverbindung miteinander verbunden sind. Zwischen den Rahmenwänden sind die Zusatzrolle, der Exzenter, der Verschwenkantrieb, der Druckhebel mit Feder und der Stützarm aufgenommen. Durch die Rahmenwände sind diese Bauteile vor äußeren Einwirkungen günstig geschützt.

Eine zusätzliche Querverbindung, wie angesprochen, ist bevorzugt dahingehend vorgesehen, dass sie zur Erlangung eines Messwertes dient, der ermitteln lässt, in welcher (Absenk-) Position sich die Zusatzrolle befindet. Hierzu kann beispielsweise ein induktiver Näherungsschalter an dem Stützarm vorgesehen sein, der die Entfernung von dieser Verstrebung zu dem Stützarm registriert. Der Stützarm ist feststehend, während die Querverbindung sich zusammen mit dem Rahmen bei einer Absenkung oder Anhebung bewegt. Die Querverbindung kann zu diesem Zweck beispielsweise aus einem einfachen Blechstreifen bestehen, da die Aufnahme von Kräften nicht im Vordergrund steht.

Auch der Verschwenkantrieb für den Exzenter ist bevorzugt vollständig zwischen den Rahmenwänden angeordnet. Dagegen kann ein Antriebsmotor und/ oder ein Getriebe für die Zusatzrolle außenseitig an einer der Rahmenwände angeordnet sein. Hier ist es in der Abwägung günstig, wenn der Antriebsmotor ohne Weiteres zugänglich ist. Da im Weiteren ohnehin der Antriebsmotor für die Zusatzrolle wesentlich größer ist als etwa der Antriebsmotor für den Verschwenkantrieb, würde ansonsten erheblicher Leerraum zwischen den Rahmenwänden sich ergeben.

Die Zusatzrolle kann eine Bockrolle sein, deren Lauffläche vergleichbar weich ausgestaltet ist (zum Beispiel aus Weichgummi, um eine gute Traktion zu erreichen). Der Durchmesser der Zusatzrolle ist bevorzugt gleich oder kleiner als der Durchmesser der weiteren, üblichen, am Chassis eines Krankenhausbettes angebrachten Laufrollen. Das vorzugsweise zwischen dem Antriebsmotor für die Zusatzrolle und die Zusatzrolle geschaltete Getriebe ist weiter bevorzugt so ausgebildet, dass es keine Selbsthemmung besitzt, also nur einen möglichst niedrigen Reibungswert. Dies ist vorteilhaft dahingehend, dass auch bei Ausfall des Motors oder etwa wenn der Motor für kleinere Strecken nicht eingeschaltet werden soll, ein einfaches Verschieben eines Krankenhausbettes auch bei abgesenkter Zusatzrolle günstig möglich ist. Die Zusatzrolle weist in diesem Sinne einen Freilauf auf.

Zur Versorgung des Antriebsmotors und des Verschwenkantriebes mit elektrischen Strom ist bevorzugt vorgesehen, dass eine entsprechende Verbindung mit einem in der Regel schon vorhandenen Akkumulator in einem Krankenhausbett vorgenommen wird. Etwa zur Verstellung von Kopf- und/oder Fußteilen des Bettes sind in der Regel bereits Elektroantriebe an dem Krankenhausbett vorhanden, die über einen Akkumulator versorgt werden können. Zur Steuerung, das heißt insbesondere Aktivierung und Deaktivierung der Zusatzrolle bzw. zum Absenken und Hochfahren der Zusatzrolle, sind entsprechende Schalter und eine Steuereinheit am Krankenhausbett dann bevorzugt vorgesehen. Der Schalter kann ein Drucktaster sein, welcher die gesamte Zeit betätigt werden muss, wenn die Unterstützung der Zusatzrolle genutzt werden soll. Dies bringt den Vorteil der sicheren Betätigung mit sich. Auf die Betätigung der Drucktaste hin kann zum Einen die Zusatzrolle mit Hilfe des Verschwenkantriebes aus der Freigabestellung in die Bodenkontaktstellung verschwenken und zum Anderen der Antriebsmotor die Zusatzrolle antreiben.

Dieser beschriebene Ablauf kann beispielsweise in einer Steuerung des Steuergerätes niedergelegt sein. Weiter, insbesondere ergänzend, ist es auch bevorzugt, mit Hilfe des Steuergerätes die Zusatzrolle antriebsmäßig so zu steuern, dass eine langsame Beschleunigung realisiert ist. In weiterer bevorzugter Ausgestaltung der Steuerung ist auch vorgesehen, dass der Antriebsmotor der Zusatzrolle eigenständig abschaltet, wenn der verbleibende Energieinhalt des Akkumulators ein gewisses, vorgegebenes Maß unterschreitet. Dies insbesondere auch um sicherzustellen, dass die verbleibende Energie ausreicht, die Zusatzrolle mittels des Verschwenkantriebes in die Freigabestellung zu verlagern.

Zur Abfrage der Position der Zusatzrolle kann ein entsprechender Abfragemechanismus vorgesehen sein. Geeignet ist beispielsweise ein induktiver Näherungsschalter, welcher die Position der Zusatzrolle relativ zu dem Chassis erfasst. In konkreterer Ausgestaltung kann hierzu vorgesehen sein, dass ein solcher Näherungsschalter an dem Stützarm angebracht ist, der von der Unterseite des Chassis zwischen die Rahmenwände ragt. Wenn sich nun der Rahmen absenkt, kann der Näherungsschalter, der am Stützarm angebracht ist, ein mit dem Rahmen verschwenkendes Teil hinsichtlich der Entfernung zum Näherungsschalter erfassen und hieraus die Stellung der Zusatzrolle ableiten.

Die Erfindung wird nachstehend anhand der beigefügten Zeichnung, die jedoch lediglich ein Ausführungsbeispiel darstellt, näher erläutert. Hierbei zeigt:
- Fig.1: eine perspektivische Ansicht eines Krankenhausbettes, an dessen Chassis eine Zusatzrolle montiert ist, die sich in der Freigabestellung befindet;
- Fig. 2: eine Unteransicht der Zusatzrolle in Blickrichtung II aus Fig. 1;
- Fig. 3: eine perspektivische Unteransicht der Zusatzrolle;
- Fig. 4: einen Schnitt entlang der Linie IV - IV aus Fig. 2;
- Fig. 5: eine Seitenansicht der Zusatzrolle in der Zwischenstellung gemäß Blickrichtung V aus Fig. 2 und
- Fig. 6: einen Schnitt entsprechend Fig. 4, jedoch befindet sich hier die Zusatzrolle in der Bodenkontaktstellung.

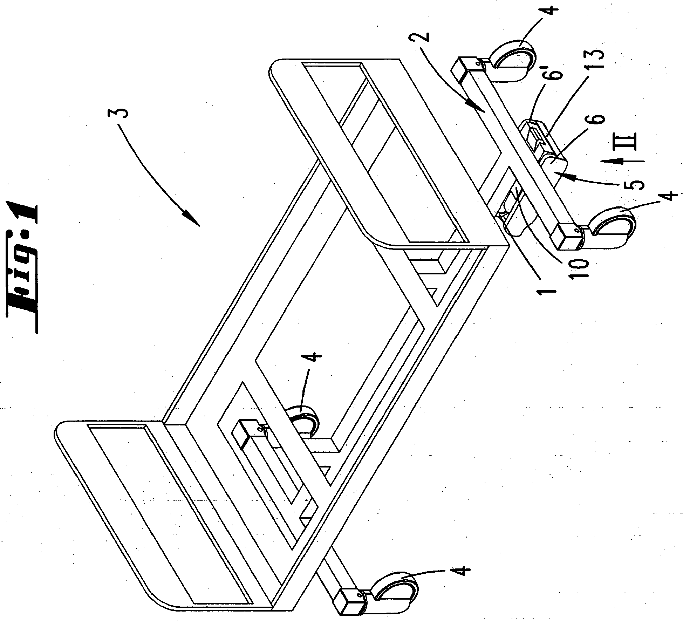

Die Figur 1 zeigt eine perspektivische Ansicht eines Krankenhausbettes 3 mit einem Chassis 2 und einer daran angeordneten Zusatzrolle 1, wobei jedoch ein Akkumulator und verschiedene Bedienelemente nicht dargestellt worden sind. Die Zusatzrolle 1 kann zwischen den Laufrollen 4 des Kopf- oder Fußendes des Krankenhausbettes 3 angeordnet sein. Es ist aber auch denkbar, dass die Zusatzrolle 1 zentrisch zu den vier jeweils an den Ecken des Chassis 2 angeordneten Laufrollen 4 an dem Chassis 2 fixiert ist. Die Zusatzrolle 1 ist jeweils bevorzugt so ausgerichtet, dass die Laufrichtung der Zusatzrolle 1 parallel zu der Längserstreckung des Krankenhausbettes 3 verläuft.

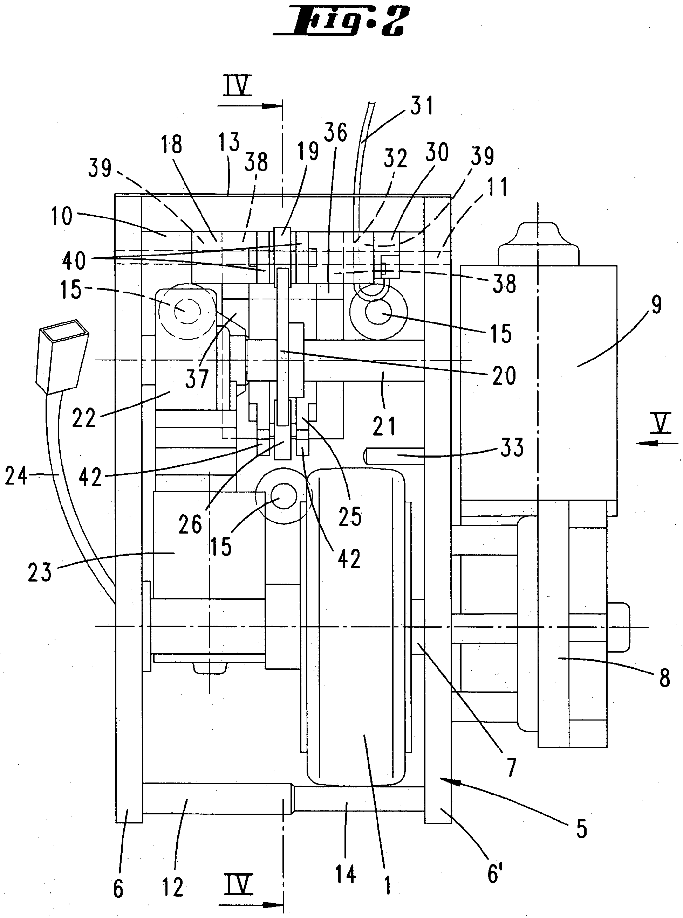

Die Zusatzrolle 1 ist in einem Rahmen 5 aufgenommen, welcher beim Ausführungsbeispiel aus zwei parallel zueinander angeordneten Rahmenwänden 6, 6' besteht. Zwischen den Rahmenwänden 6, 6' ist die Zusatzrolle 1 angeordnet. Wie in der Figur 2 gut zu erkennen ist, ist die Zusatzrolle 1 außermittig, nämlich näher an der Rahmenwand 6' angeordnet. Damit ist eine günstige Einschachtelung mit den weiteren noch beschriebenen Aggregaten erreicht. Die Laufrichtung der Zusatzrolle 1 ist parallel zu den Rahmenwänden 6, 6'. Die Welle 7 der Zusatzrolle 1 ist lagernd von der Rahmenwand 6 aufgenommen, ohne diese zu durchsetzen, und durchragt die Rahmenwand 6', wobei hier auch eine Lagerung realisiert ist. Die Welle 7 ist fest mit der Zusatzrolle 1 verbunden. Das aus der Rahmenwand 6' herausragende Ende der Welle 7 ist mit einem Getriebe 8 verbunden, über welches Getriebe 8 ein Antriebsmotor 9 die Zusatzrolle 1 antreibt. Das Getriebe 8 sowie der Antriebsmotor 9 sind von außen an der Rahmenwand 6' befestigt. Der Antriebsmotor 9 ist ein Elektromotor. Das Getriebe 8 ist so ausgebildet, dass es nicht selbsthemmend ist und eine möglichst geringe innere Reibung aufweist. Hiermit kann eine Freilaufwirkung erzielt werden. Zur Stromversorgung des Antriebsmotors 9 ist an dem Getriebe 8 ein Steckanschluss 35 vorgesehen.

Zusätzlich zu den Rahmenwänden 6, 6' ist eine Montageplatte 10 vorgesehen. Beim Ausführungsbeispiel ist die Montageplatte 10 zwischen den Rahmenwänden 6, 6', deren der Unterseite des Chassis des Krankenhausbettes zugeordneten Bereichen, angeordnet. Der Rahmen 5 ist mittels einer Achse 11 schwenkbeweglich mit der im Einbauzustand fest mit dem Chassis des Krankenhausbettes verbundenen Montageplatte 10 verbunden. Die Achse 11 ist beim Ausführungsbeispiel mit den Rahmenwänden 6, 6' schraubverbunden. Die Rahmenwände 6, 6' sind nicht nur durch die Achse 11, sondern auch durch die Welle 7 der Zusatzrolle 1 verbunden. Der Rahmen 5 ist darüber hinaus mit Querverbindungen 12,13 ausgebildet. Eine Querverbindung 12 ist in der Nähe der Zusatzrolle 1 und eine weitere Querverbindung 13 in Form eines Hilfsbleches in der Nähe der Achse 11 angeordnet. Die Querverbindung 12 wird durch einen Bolzen gebildet, welcher einen durchmesserverringerten Abschnitt 14 aufweist. Der Bolzen bildet also gleichsam eine Verstrebung aus zwischen dem Rahmenwänden 6, 6'. Der Abschnitt 14 ist der Zusatzrolle 1 zugeordnet. Die Querverbindung 13 ist beim Ausführungsbeispiel mit den Stirnflächen der Rahmenwände 6,6' mittels Schrauben verbunden.

Zur festen Verbindung der Montageplatte 10 mit dem Chassis 2 des Krankenhausbettes 3 sind in der Montageplatte 10 Bohrungen 15 ausgebildet, welche von - beim Ausführungsbeispiel - Zylinderkopfschrauben 16 durchsetzt sind.

Die Zylinderkopfschrauben 16 sind in entsprechenden Gewindebohrungen 17 des Chassis 2 schraubgehaltert.

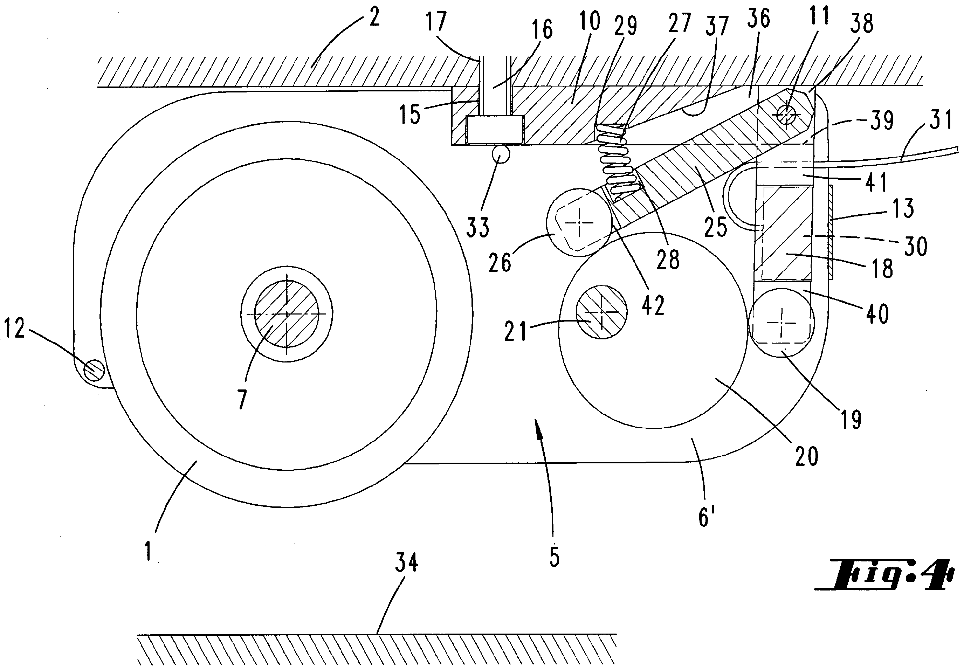

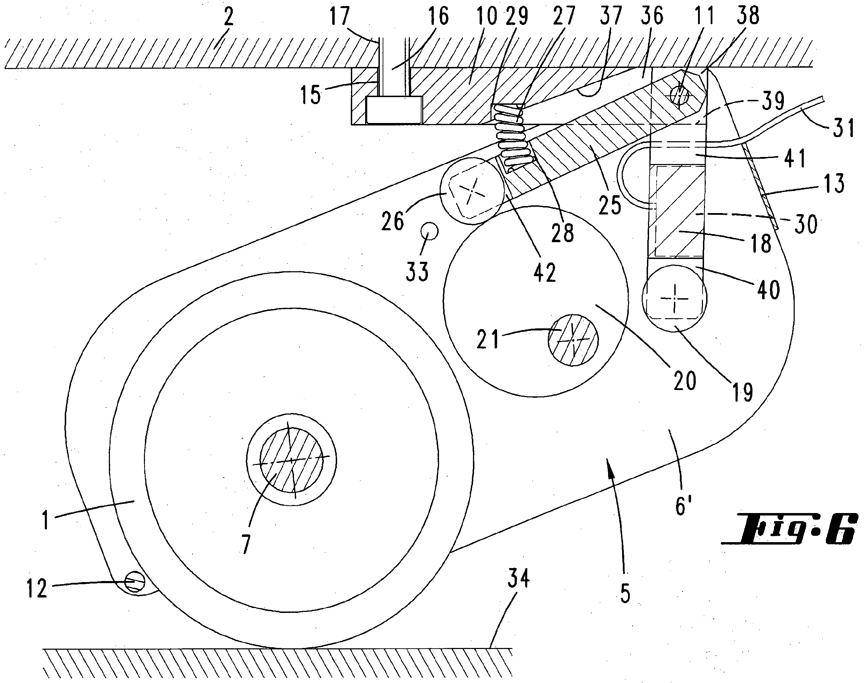

Die Figuren 4 und 6 zeigen einen Schnitt durch eine Bohrung 15 mit einliegender Zylinderkopfschraube 16. Wie aus den Figuren 2 und 4 besonders hervorgeht, bildet die Montageplatte 10 eine randoffene Aussparung 36 in Richtung der Achse 11 aus. Die Montageplatte 10 verjüngt sich im Bereich der randoffenen Aussparung 36 und bildet so eine schräg verlaufende Decke 37 aus. Diese Decke 37 überragt nur einen Teil der Aussparung 36. Im Endbereich geht die Aussparung 36 komplett durch die Montageplatte 10 hindurch. Der Winkel der Decke 37 beträgt in etwa 20° zur Liegefläche des Krankenhausbettes 3. Die Aussparung 36 ist zentrisch in der Montageplatte 10 angeordnet und ist etwa halb so breit, wie die Gesamtbreite der Montageplatte 10 beträgt (siehe Figur 2).

In der Aussparung 36 steckt ein Endabschnitt 38 eines Stützarmes 18 ein. Der Endabschnitt 38 ist der Breite der Aussparung 36 formangepasst. Die wesentliche Breite des Stützarmes 18 ist breiter als die Breite der Aussparung 36 und so bildet der Stützarm 18 seitliche Schultern 39 aus, die auf der Montageplatte 10 aufliegen. Der Stützarm 18 wird durch die Achse 11 fest mit der Montageplatte 10 verbunden. Die Schultern 39 tragen dazu bei, dass der Stützarm 18 starr an die Montageplatte 10 angebunden ist. Der Stützarm 18 weist etwa einen rechten Winkel zu der Montageplatte 10 auf und ragt in den Zwischenraum zwischen den beiden Rahmenwänden 6,6'. Am freien Ende des Stützarmes 18 ist ein Ringkörper 19 angeordnet, welcher entsprechend dem Außenring eines Kugellagers auf Kugeln drehbar ist. Im Einzelnen ist hierzu eine Lagerung der die Kugeln und den Ringkörper 19 aufnehmenden Achse zwischen zwei Schenkeln 40 vorgesehen.

Wie insbesondere Figur 2 zu entnehmen ist, wirkt ein Exzenter 20 mit dem Ringkörper 19 zusammen. Der Ringkörper 19 ermöglicht ein Abrollen bezüglich des Exzenters 20. Der Exzenter 20 ist, beim Ausführungsbeispiel mittig, zwischen den Rahmenwänden 6,6' auf einer Welle 21 angeordnet.

In der Figur 2 ist weiter zu erkennen, dass das Wellenende, welches der Rahmenwand 6 zugeordnet ist, Teil eines Getriebes 22 ist. Vermittels des Getriebes 22 kann die Welle 21 durch den Verschwenkantrieb 23 angetrieben werden. Der Verschwenkantrieb 23 sowie das Getriebe 22 sind auf der Innenseite der Rahmenwand 6 befestigt und bilden zusammen die Verschwenkeinheit für die Zusatzrolle 1. Der Verschwenkantrieb 23 ist über ein Kabel 24 mit einer Stromquelle, vermittels auch eines zwischengeschalteten Steuergerätes, verbunden. Wie darüber hinaus Figur 2 zu entnehmen ist, verläuft der Verschwenkantrieb 23 seitlich entlang der Zusatzrolle 1. Durch die Anordnung in einer Nebeneinanderbeziehung der Zusatzrolle 1 und des Verschwenkantriebes 23 lässt sich eine günstige Baugröße des Rahmens 5 erzielen.

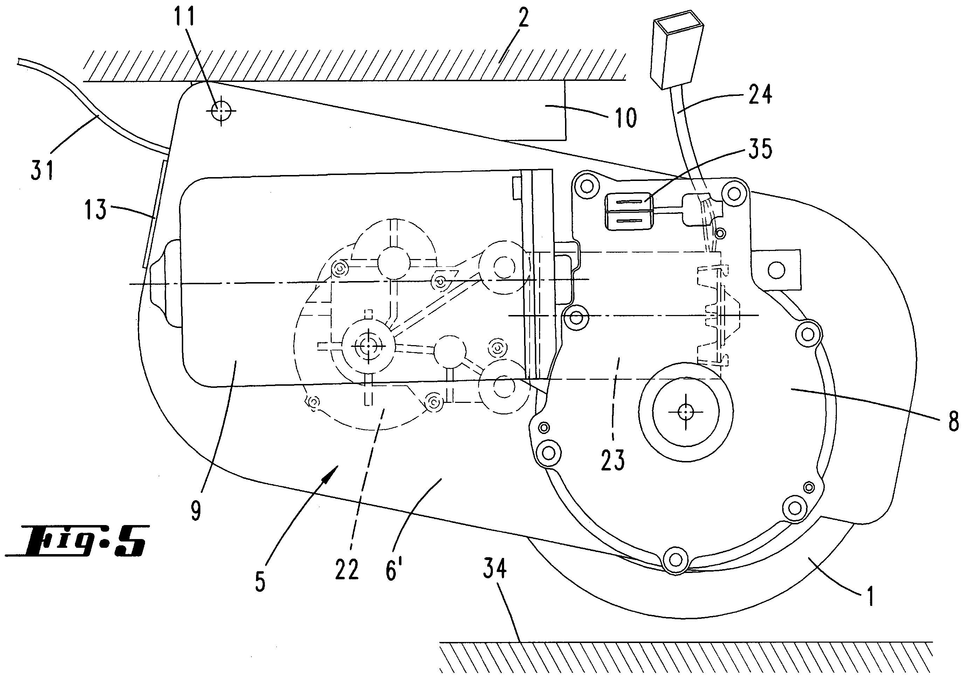

Wie den Figuren 2 und 5 weiter zu entnehmen ist, verlaufen die beiden Symmetrieachsen des Verschwenkantriebes 23 und des Antriebsmotors 9 etwa parallel zueinander. Die Symmetrieachsen der Wellen 7,21 von der Zusatzrolle 1 und dem Exzenter 20 verlaufen etwa im rechten Winkel zueinander (siehe Figur 2).

Zusätzlich zu dem Stützarm 18 ist ein Druckhebel 25 vorgesehen. Der Druckhebel 25 liegt unmittelbar in der Verschwenkbahn des Exzenters 20 bzw. im engeren Sinne der Welle 21, wenn der Rahmen 5 verschwenkt wird. Der um eine Achse 25 verschenkbare Druckhebel 11 ist durch eine Feder 27 abgestützt, welche einerseits an dem Chassis des Krankenhausbettes bzw. speziell beim Ausführungsbeispiel der Montageplatte 10 anliegt und andererseits - vermittels des Druckhebels 25 - an dem Exzenter 20. Der Druckhebel 25 ist beim Ausführungsbeispiel weiter an dem Stützarm 18 gelagert. Hierfür weist der Stützarm 18, chassisseitig, eine Aussparung 41 auf, und eine Achse 11, die den Druckhebel 25 fußseitig durchsetzt. Wie auch schon im Hinblick auf den Stützarm 18 erläutert, weist auch der Druckhebel 25 exzenterseitig einen Ringkörper 26 auf. Entsprechend wird auch der Ringkörper 26 von nicht dargestellten Kugeln entsprechend einem Kugellager auf dem Ende des Druckhebels 25 gelagert. In Einzelheit wiederum durch eine Achse zwischen zwei Schenkeln 42 des Druckhebels 25.

Der Druckhebel 25 wird von der Feder 27 in eine Richtung entgegen dem Uhrzeigersinn, bezogen auf die Figuren 4 und 6, beaufschlagt. Es ist ersichtlich, dass der Druckhebel 25 somit immer an dem Exzenter 20 anliegt, während dies für den Stützarm 18 nicht notwendig gegeben sein muss, vgl. Figur 6. Insofern wirkt der Druckhebel 25 zusammen mit der Feder 27 im Sinne eines Stoßdämpfers. Die Bewegung der Zusatzrolle 1 auf dem Boden, also in der abgesenkten Stellung, kann hierdurch ausgeglichen und gedämpft werden (bezogen auf Bewegungen in Vertikalrichtung).

In weiterer Einzelheit ist ein Ende der Druckfeder 27 in einer Aufnahmehöhlung 28 des Druckhebels 25 aufgenommen. Das andere Ende der Feder 27 liegt in einer Aufnahmehöhlung 29 der Decke 37 der Aussparung 36 der Montageplatte 10 ein.

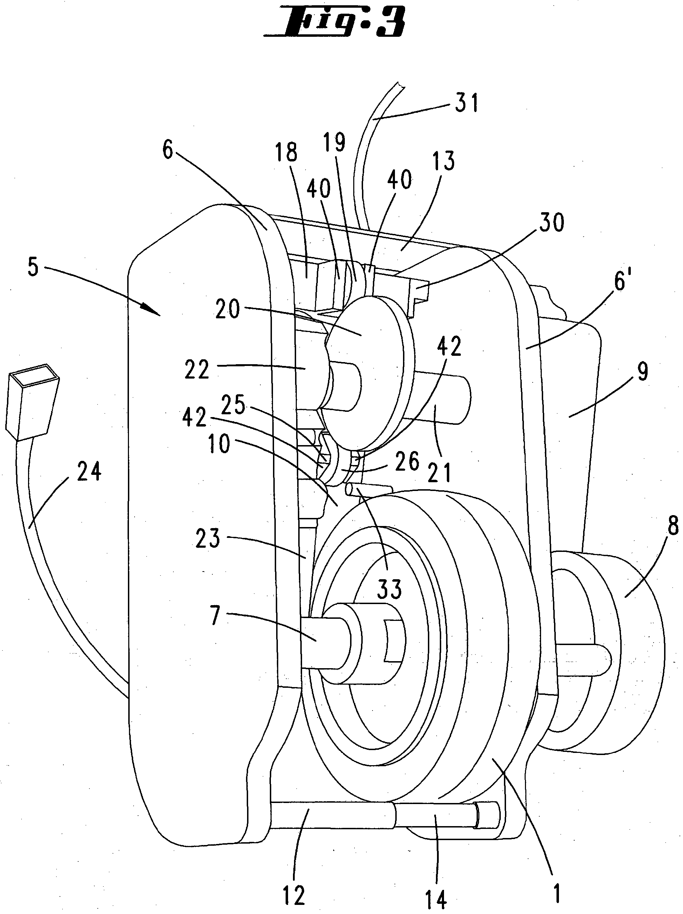

Wie den Figuren 2 und 3 weiter zu entnehmen ist, ist seitlich an dem Stützarm 18 ein Sensor 30 angeordnet. Bei dem Sensor 30 kann es sich beispielsweise um einen induktiven Näherungsschalter handeln. Ein für den Sensor 30 notwendiges Anschlusskabel 31 ist auf der Seite der Zusatzrolle 1 des Sensors 30 angebracht. Dieses Anschlusskabel 31 ist im Weiteren durch eine Bohrung 32, welche parallel zu der Montageplatte 10 verläuft, hindurchgeführt. Der Sensor 30 ist auf der Höhe der Querverbindung 13 angeordnet (siehe Figuren 4 und 6).

Wie ebenfalls in den Figuren 2 und 3 gut zu erkennen ist, ragt ein Anschlagstift 33 ausgehend von der Rahmenwand 6' in den Zwischenraum zwischen den beiden Rahmenwänden 6, 6'. In der Figur 4 ist gut zu erkennen, dass der Anschlagstift 33 ein zu weites Verschwenken des Rahmens 5 im Uhrzeigersinn verhindert. Der Anschlagstift 33 stößt in der Freigabestellung mit seiner Mantelfläche an der Oberfläche der Montageplatte 10 an und begrenzt so den Verschwenkweg des Rahmens 5.

Bevorzugt werden die Wellen 7,21 von Kugellagern aufgenommen, die in den Zeichnungen nicht dargestellt worden sind. Die Kugellager liegen dabei in Aufnahmebohrungen in den Rahmenwänden 6,6' des Rahmens 5 ein.

Nachfolgend wird die Wirkungsweise der erfindungsgemäßen Zusatzrolle 1 näher beschrieben:

In den Figuren 1 bis 4 befindet sich die Zusatzrolle 1 in der Freigabestellung. Die Zusatzrolle 1 wird in Richtung der Freigabestellung durch den Anschlagstift 33 begrenzt, welcher gegen die Montageplatte 10 stößt. Die Zusatzrolle 1 ist von dem Fußboden 34 beabstandet.

Wird nun die Unterstützung der Zusatzrolle 1 benötigt, kann durch einen Richtungsschalter die Antriebsrichtung der Zusatzrolle 1 gewählt werden, und anschließend kann durch einen Drucktaster die Zusatzrolle 1 in ihre Bodenkontaktstellung (Figur 6) verlagert werden. Durch Betätigen des Tasters wird der Verschwenkantrieb 23 gestartet, so dass sich der Exzenter 20 von der Stellung in Figur 4 in die Stellung in Figur 6 verlagert. In der Figur 4 (Freigabestellung) liegt der Bereich der größten Abmessung (der Abstand des Außenumfangs der Exzenterscheibe zum Achsmittelpunkt der Exzenterachse) des Exzenters 20 an dem Ringkörper 19 des Stützarms 18 an. Der Ringkörper 26 des Druckhebels 25 liegt an dem Exzenter 20 an und weist dabei einen wesentlich geringeren Abstand zu der Symmetrieachse der Welle 21 auf als der Ringkörper 19, und zwar in einem Umfangsbereich der nahe des oder am geringsten Abstand zu der Exzenterachse sich befindet. Die Figur 5 zeigt eine Zwischenstellung. In der Figur 6 wurde der Exzenter 20 mittels des Verschwenkantriebes 23 gegen den Uhrzeigersinn verlagert. In dieser Position (Bodenkontaktstellung) liegt der Bereich der größten Abmessung des Exzenters 20 an dem Ringkörper 26 des Druckhebels 25 an. Nun weist die Welle 21 einen wesentlich geringeren Abstand zu dem Ringkörper 19 auf, wobei sich der Exzenter 20 und der Ringkörper 19 bevorzugt nicht berühren. Der da verbleibende - und auch dargestellte - Abstand zwischen dem Außenumfang des Exzenters 20 und dem Ringkörper 19 ermöglicht ein "Durchfedern" der Zusatzrolle 1 bei Unebenheiten im Fußboden. Dies wird weiter unten noch im Einzelnen erläutert. In der Bodenkontaktstellung ist die Feder 27 weiter komprimiert als in der Freigabestellung. Somit wird eine hohe Anpresskraft zwischen der Zusatzrolle 1 und dem Fußboden 34 erreicht. Die hohe Anpresskraft ermöglicht auch eine gute Traktion der Zusatzrolle 1 bei weniger griffigen Fußböden wie beispielsweise nach einer Reinigung. Durch die Feder 27 und den Druckhebel 25 wird der Rahmen 5 samt der Zusatzrolle 1 ausgehend von den Figuren 4 und 6 um die Achse 11 entgegen des Uhrzeigersinns verlagert. In der Figur 6 wird die Zusatzrolle 1 von der Kraft der Feder 27 auf den Fußboden 34 gedrückt. In dieser Bodenkontaktstellung weist der Exzenter 20 einen gewissen Abstand zu dem Ringkörper 19 des Stützarms 18 auf. Dadurch wird ein "Durchfedern" der Zusatzrolle 1 erreicht, dass, wenn Unebenheiten im Fußboden 34 auftreten, die Feder 27 die Zusatzrolle 1 weiter entgegen des Uhrzeigersinns verlagern kann, so dass immer ein Bodenkontakt von der Zusatzrolle 1 gegeben ist. Die Feder 27 gleicht die Unebenheiten im Fußboden 34 aus. Nachdem die Zusatzrolle 1 in die Position gemäß Figur 6 verlagert worden ist, aktiviert das Steuergerät den Antriebsmotor 9 der Zusatzrolle 1, so dass dieser die Zusatzrolle 1 langsam anfahren lässt. Nun wird eine das Krankenhausbett 3 verfahrende Person so lange beim Verfahren von der Zusatzrolle 1 unterstützt, wie diese Person den Drucktaster betätigt. Wenn der Drucktaster freigegeben wird, fällt der zusätzliche Antrieb durch den Antriebsmotor 9 weg und der Verschwenkantrieb verlagert den Exzenter 20 in die Position, die in der Figur 4 dargestellt worden ist. Dabei läuft der Exzenter 20 auf dem Ringkörper 19 ab und vergrößert den Abstand zwischen der Achse des Ringkörpers 19 und der Achse der Welle 21. Der Rahmen 5 wird um die Achse 11 in Richtung der Freigabestellung verschwenkt.

Bevorzugt ist auch, dass nur solange die Unterstützung durch die Zusatzrolle 1 gegeben ist, bis ein vorgegebenes Energieniveau des Akkumulators erreicht ist. Wenn dieses Energieniveau erreicht ist, schaltet das Steuergerät den Antriebsmotor 9 für die Zusatzrolle 1 ab. Das Energieniveau reicht jedoch noch aus, um die Zusatzrolle 1 wieder mittels des Verschwenkantriebes 23 in ihre Freigabestellung zu verlagern. So bleiben wichtige Funktionen des Krankenhausbettes 3 erhalten.

Wie in den Figuren 4 und 6 zu sehen ist, entstehen bei den unterschiedlichen Stellungen der Zusatzrolle 1 auch unterschiedliche Abstände zwischen der Querverbindung 13 und dem Stützarm 18, an welchem auch der Sensor 30 angeordnet ist. Durch die unterschiedlichen Abstände kann das Steuergerät mit Hilfe des Sensors 30 die Position der Zusatzrolle 1 ableiten. Die Querverbindung 13 verlagert sich proportional zu der Verlagerung der Zusatzrolle 1.

## Patentansprüche

1. Zusatzrolle mit einem starren Rahmen, wobei die Zusatzrolle in dem starren Rahmen gelagert ist, und zusammen mit dem Rahmen (5) relativ zu einem Chassis, an dem sie anzubringen ist, durch Verschwenken anhebbar oder absenkbar ist, wobei weiter ein an dem Rahmen befestigter Antriebsmotor (9) für die Zusatzrolle vorgesehen ist und ein gesonderter Schwenkantrieb (23) zum Anheben und Absenken der Zusatzrolle (1) vorgesehen ist, wobei weiter die kompakte Bauweise der Einheit aus Rahmen (5), Antriebsmotor (9) und Zusatzrolle (1) vorteilhaft ist im Hinblick auf eine Ertüchtigung vorhandener Krankenhausbetten oder unabhängig hiervon, **dadurch gekennzeichnet, dass** der gesonderte Schwenkantrieb (23) insgesamt an dem Rahmen (5) befestigt ist und mit diesem verschwenkt.

2. Zusatzrolle nach Anspruch 1, **dadurch gekennzeichnet, dass** der Verschwenkantrieb (23) mittels eines Exzenters (20) den Rahmen (5) relativ zu dem Chassis (2), an dem der Exzenter (20) auch abgestützt ist, bewegt.

3. Zusatzrolle nach Anspruch 2, **dadurch gekennzeichnet, dass** der Exzenter (20) weiter mit einer Feder (27) zusammenwirkt, die anderendig sich am Chassis (2) abstützt.

4. Zusatzrolle nach einem Anspruch 3, **dadurch gekennzeichnet, dass** die Feder (27) eine den Rahmen (5) in die abgesenkte Stellung vorspannende Druckfeder ist.

5. Zusatzrolle nach einem der Ansprüche 3 oder 4, **dadurch gekennzeichnet, dass** die Feder (27) vermittels eines an einer chassisfesten Achse (11) angelenkten Druckhebels (25) auf den Exzenter (20) einwirkt.

6. Zusatzrolle nach einem der Ansprüche 2 bis 5, **dadurch gekennzeichnet, dass** die Abstützung des Exzenters (20) an dem Chassis (2) mittels eines festen Stützarms (18) realisiert ist.

7. Zusatzrolle nach Anspruch 6, **dadurch gekennzeichnet, dass** der Stützarm (18) sich innerhalb des Rahmens (5) erstreckt.

8. Zusatzrolle nach einem der vorangehenden Ansprüche, **dadurch gekennzeichnet, dass** eine Montageplatte (10) vorgesehen ist, mit welcher der Rahmen (5) schwenkbeweglich verbunden ist, wobei die Montageplatte (10) fest mit dem Chassis (2) verbunden ist.

9. Zusatzrolle nach Anspruch 8, **dadurch gekennzeichnet, dass** der Stützarm (18) Teil der Montageplatte (10) ist.

10. Zusatzrolle nach einem der Ansprüche 8 oder 9, **dadurch gekennzeichnet, dass** der Druckhebel (25) an derselben Achse (11) angelenkt ist, welche die Montageplatte (10) mit dem Rahmen (5) verbindet.

11. Zusatzrolle nach einem der Ansprüche 2 bis 10, **dadurch gekennzeichnet, dass** der Rahmen (5) aus zwei gegenüberliegenden Rahmenwänden (6, 6') besteht, in deren Längserstreckung hintereinander Wellen (7,21) der Zusatzrolle (1) und des Exzenters (20) gelagert sind.

12. Zusatzrolle nach Anspruch 11, **dadurch gekennzeichnet, dass** die Rahmenwände (6, 6') zusätzlich und/oder zu den Wellen (7, 21) noch durch eine zusätzliche Querverbindung (12,13) miteinander verbunden sind.

13. Zusatzrolle nach einem der Ansprüche 5 bis 13, **dadurch gekennzeichnet, dass** der Rahmen (5) durch die Achse (11) verbunden ist.

14. Zusatzrolle nach einem oder mehreren der vorangehenden Ansprüche 2 bis 13, **dadurch gekennzeichnet, dass** der Rahmen (5) aus zwei gegenüberliegenden Rahmenwänden (6,6') besteht und dass der Verschwenkantrieb (23) für den Exzenter (20) zwischen den Rahmenwänden (6, 6') angeordnet ist.

15. Zusatzrolle nach einem der vorangehenden Ansprüche, **dadurch gekennzeichnet, dass** der Rahmen (5) aus zwei gegenüberliegenden Rahmenwänden (6, 6') besteht und dass der Antriebsmotor (9) und/ oder ein Getriebe (8) für die Zusatzrolle (1) außenseitig an einer der Rahmenwände (6') angeordnet ist.

## Claims

1. Additional castor comprising a rigid frame, the additional castor being mounted in the rigid frame and it being possible to raise or lower the additional castor and the frame (5) relative to a chassis, to which said castor is to be attached, by means of pivoting, a drive motor (9) fastened to the frame additionally being provided for the additional castor and a separate pivot drive (23) being provided for raising and lowering the additional castor (1), the compact design of the unit made up of the frame (5), drive motor (9) and additional castor (1) also being advantageous, either with regard to strengthening existing hospital beds or irrespective thereof, **characterised in that** the separate pivot drive (23) is fastened as a whole to the frame (5) and pivots together therewith.

2. Additional castor according to claim 1, **characterised in that** the pivot drive (23) uses an eccentric (20) to move the frame (5) relative to the chassis (2), on which the eccentric (20) is also supported.

3. Additional castor according to claim 2, **characterised in that** the eccentric (20) also interacts with a spring (27), the other end of which is supported on the chassis (2).

4. Additional castor according to claim 3, **characterised in that** the spring (27) is a compression spring which biases the frame (5) into the lowered position.

5. Additional castor according to either claim 3 or claim 4, **characterised in that** the spring (27) acts on the eccentric (20) by means of a pressure lever (25) hinged to a chassismounted pin (11).

6. Additional castor according to any of claims 2 to 5, **characterised in that** the eccentric (20) is supported on the chassis (2) by means of a fixed supporting arm (18).

7. Additional castor according to claim 6, **characterised in that** the supporting arm (18) extends inside the frame (5).

8. Additional castor according to any of the preceding claims, **characterised in that** a mounting plate (10) is provided, to which the frame (5) is pivotally connected, the mounting plate (10) being rigidly connected to the chassis (2).

9. Additional castor according to claim 8, **characterised in that** the supporting arm (18) is part of the mounting plate (10).

10. Additional castor according to either claim 8 or claim 9, **characterised in that** the pressure lever (25) is hinged to the same pin (11) which connects the mounting plate (10) to the frame (5).

11. Additional castor according to any of claims 2 to 10, **characterised in that** the frame (5) consists of two opposite frame walls (6, 6'), along the longitudinal extent of which shafts (7, 21) of the additional castor (1) and of the eccentric (20) are mounted one behind the other.

12. Additional castor according to claim 11, **characterised in that** the frame walls (6, 6') are also interconnected by means of an additional transverse connection (12, 13) in additional and/or to the shafts (7, 21).

13. Additional castor according to any of claims 5 to 13, **characterised in that** the frame (5) is connected by the pin (11).

14. Additional castor according to one or more of the preceding claims 2 to 13, **characterised in that** the frame (5) consists of two opposite frame walls (6, 6'), and **in that** the pivot drive (23) for the eccentric (20) is arranged between the frame walls (6, 6').

15. Additional castor according to any of the preceding claims, **characterised in that** the frame (5) consists of two opposite frame walls (6, 6'), and **in that** the drive motor (9) and/or a transmission (8) for the additional castor (1) is/are arranged on the outside of one of the frame walls (6').

## Revendications

1. Roulette supplémentaire avec un cadre rigide, la roulette supplémentaire étant montée dans le cadre rigide et pouvant être monté ou descendu par pivotement, ensemble avec le cadre (5), par rapport à un châssis sur lequel il doit être installé, un moteur d'entraînement (9) fixé sur le cadre étant en outre prévu pour la roulette auxiliaire et un entraînement de pivotement distinct (23) étant prévu pour monter et descendre la roulette auxiliaire (1), la construction compacte de l'unité comprenant le cadre (5), le moteur d'entraînement (9) et le roulette auxiliaire (1) étant en outre avantageuse dans la perspective d'un renforcement de lits d'hôpital existants ou indépendamment, **caractérisée en ce que** l'entraînement de pivotement distinct (23) est fixé dans l'ensemble sur le cadre (5) et pivote avec celui-ci.

2. Roulette auxiliaire selon la revendication 1, **caractérisée en ce que** l'entraînement de pivotement (23) déplace le cadre (5) au moyen d'un excentrique (20) par rapport au châssis (2), sur lequel l'excentrique (20) prend également appui.

3. Roulette auxiliaire selon la revendication 2, **caractérisée en ce que** l'excentrique (20) coopère en outre avec un ressort (27) qui prend appui sur le châssis (2) à son autre extrémité.

4. Roulette auxiliaire selon la revendication 3, **caractérisée en ce que** le ressort (27) est un ressort de pression qui précontraint le cadre (5) dans la position descendue.

5. Roulette auxiliaire selon l'une des revendications 3 ou 4, **caractérisée en ce que** le ressort (27) agit sur l'excentrique (20) par le biais d'un levier de pression (25) articulé sur un axe fixé au châssis (11).

6. Roulette auxiliaire selon l'une des revendications 2 à 5, **caractérisée en ce que** l'appui de l'excentrique (20) sur le châssis (2) et réalisé au moyen d'un bras de soutien fixe (18).

7. Roulette auxiliaire selon la revendication 6, **caractérisée en ce que** le bras de soutien (18) s'étend à l'intérieur du cadre (5).

8. Roulette auxiliaire selon l'une des revendications précédentes, **caractérisée en ce qu'**il est prévu une plaque de montage (10) avec laquelle le cadre (5) est relié en pivotement, la plaque de montage (10) étant reliée de façon fixe avec le châssis (2).

9. Roulette auxiliaire selon la revendication 8, **caractérisée en ce que** le bras de soutien (18) fait partie de la plaque de montage (10).

10. Roulette auxiliaire selon l'une des revendications 8 ou 9, **caractérisée en ce que** le levier de pression (25) est articulé sur le même axe (11) qui relie la plaque de montage (10) avec le cadre (5).

11. Roulette auxiliaire selon l'une des revendications 2 à 10, **caractérisé en ce que** le cadre (5) est constitué de deux parois de cadre (6, 6') en opposition dans l'extension longitudinale desquelles des arbres (7, 21) de la roulette auxiliaire (1) et de l'excentrique (20) sont montés l'un derrière l'autre.

12. Roulette auxiliaire selon la revendication 11, **caractérisée en ce que** les parois de cadre (6, 6') sont reliées l'une avec l'autre en complément et/ou avec les arbres (7, 21) au moyen d'une traverse supplémentaire (12, 13).

13. Roulette auxiliaire selon l'une des revendications 5 à 13, **caractérisée en ce que** le cadre (5) est relié à travers l'axe (11).

14. Roulette auxiliaire selon l'une ou plusieurs des revendications 2 à 13 précédentes, **caractérisée en ce que** le cadre (5) est constitué de deux parois de cadre (6, 6') en opposition et **en ce que** l'entraînement de pivotement (23) pour l'excentrique (20) est agencé entre les parois de cadre (6, 6').

15. Roulette auxiliaire selon l'une des revendications précédentes, **caractérisée en ce que** le cadre (5) est constitué de deux parois de cadre (6, 6') en opposition et **en ce que** le moteur d'entraînement (9) et/ou une transmission (8) pour le roulette auxiliaire (1) est agencé sur le côté extérieur d'une des parois de cadre (6').
